# FASCICULE DE BREVET EUROPEEN

(11) **EP 3 474 681 B1**
(45) Date de publication et mention de la délivrance du brevet: **10.06.2020**
(21) Numéro de dépôt: 17745397.4
(22) Date de dépôt: 26.06.2017
(51) Int. Cl.: A23L 2/62, C12H 1/14, C12C 5/02, C12C 12/00

(54) **UTILISATION D'UN EXTRAIT PROTÉIQUE DE LEVURE POUR STABILISER LE TROUBLE DE LA BIÈRE**
VERWENDUNG EINES HEFEPROTEINEXTRAKTS ZUR STABILISIERUNG DER BIERTRÜBUNG
USE OF A YEAST PROTEIN EXTRACT TO STABILISE BEER HAZE

(30) Priorité: 27.06.2016 FR 1655992
(43) Date de publication de la demande: 01.05.2019
(73) Titulaire: Lesaffre et Compagnie, 75001 Paris (FR)
(72) Inventeur: GOSSELIN, Yves, 62157 Allouagne (FR); MENIN, Rudy, 94600 Choisy Le Roi (FR); MEULEMANS, Stéphane, B-1330 Rixensart (BE)
(74) Mandataire: Plasseraud IP
(86) Numéro de dépôt international: PCT/FR2017/051702
(87) Numéro de publication internationale: WO 2018/002505

(56) Documents cités:
- FR-A1- 2 369 798
- JP-A- 2006 275 751
- US-A1- 2013 309 721
- Anonymous: "Spring'Finer", , octobre 2015 (2015-10), XP055350993, Extrait de l'Internet: URL:http://www.fermentis.com/wp-content/up loads/2016/12/SpringFiner_FR.pdf [extrait le 2017-03-02]
- Anonymous: "Brewing Solutions :: Biocloud", , 16 février 2015 (2015-02-16), XP055351013, Extrait de l'Internet: URL:http://web.archive.org/web/20150216152 629/http://brewing-solutions.com/products/ ?id=21 [extrait le 2017-03-02]

## Description

La présente invention a pour objet une nouvelle utilisation d'un extrait protéique de levure, à savoir pour stabiliser le trouble d'une boisson, et notamment la bière, et de préférence la bière blanche.

La bière représente une des seules boissons universelles, présente dans pratiquement tous les pays du monde. Une bière est composée de quatre ingrédients principaux, à savoir de l'eau, du houblon, de l'orge et de la levure. La longue transformation de ces éléments en bière s'étale sur une durée variant de deux à trois semaines (pour les bières industrielles) à quelques mois (pour les bières de garde, les bières de haute fermentation, les bières trappistes ...). La pureté et les qualités de l'eau sont déterminantes pour la clarté et le goût de la bière. La proportion des principaux sels minéraux contenus dans l'eau (sodium, chlorure, calcium, magnésium, sulfate et bicarbonate) aura une influence sur la douceur ou la dureté en bouche, mais aussi lors de la fabrication de la bière.

La bière blanche, contrairement à ce que l'on pourrait croire, ne désigne pas une couleur de bière mais un ingrédient : le froment. Les bières blanches sont les bières comportant une large proportion de froment en plus de l'orge (et d'autres céréales éventuelles). Les bières blanches présentent en général un trouble naturel (sauf si la bière est filtrée) qui leur donne un aspect laiteux. C'est cet aspect laiteux et la proximité sémantique en allemand de blanche (weiss) et de froment (weizen) qui expliquent l'utilisation du mot "blanche". Cependant, de par l'utilisation de malts torréfiés ou caramel, il est possible de faire des bières blanches ambrées, brunes, voire noires.

Traditionnellement, il existe deux grands types de bières blanches :
- les « weissbier/weizenbier » allemandes, faites avec une majorité de froment malté et du malt d'orge en complément, fermentées avec des levures spécifiques produisant beaucoup de phénols et donnant des notes épicées comme le clou de girofle,
- les blanches belges (ou witbier en flamand) issues majoritairement d'orge malté et de froment cru ou malté, le plus souvent épicées avec des écorces d'orange amère ou douce et des graines de coriandre.

Le trouble de la bière est causé en grande partie par des résidus protéiniques (environ 40 à 75%), des polyphénols (1,1-7,7%) et en quantité moindre par des carbohydrates (2-15%)^{1,2}. Le trouble peut également être dû à d'autres résidus tels que l'amidon, les pentosanes, l'oxalate, les β-glucanes etc.³.

Par ailleurs, il existe deux formes de trouble : le trouble au froid qui est réversible, et le trouble permanent qui résulte de l'oxydation de la bière au cours de son vieillissement⁸. Dans les deux cas, les composés majoritairement impliqués dans la formation des colloïdes sont des protéines et des polyphénols.

Le trouble au froid se forme progressivement lorsque la température diminue pour avoisiner les 0°C, mais disparaît quand la bière est réchauffée. Il s'agit ici d'une association temporaire et donc réversible entre protéines et polyphénols qui ne sont pas liés de manière covalente mais via des ponts H, des liaisons hydrophobes et ioniques.

Quant au trouble permanent, au fur et à mesure que se prolonge l'oxydation des polyphénols au cours du vieillissement de la bière, les liens qui les unissent aux protéines se multiplient et se renforcent pour devenir des liaisons covalentes. Les complexes insolubles créés ne se dissolvent plus sous l'effet de la chaleur et le trouble devient permanent⁹. Précisons que la présence de certains ions métalliques favorise également l'apparition de ce dernier.

Plusieurs études ont été menées à ce jour afin d'identifier les protéines à l'origine du trouble. Ainsi, les protéines acides dérivées d'albumine et les globulines de l'orge pourraient être responsables de la formation du trouble⁴. Il a également été montré que les protéines riches en proline étaient impliquées dans la formation du trouble^{1,3,5,6,7}. En ce qui concerne les polyphénols, ceux impliqués dans la stabilité colloïdale sont les flavonoïdes.

Dans le domaine de la bière, et particulièrement de la bière blanche, il est nécessaire que la bière présente un trouble permanent et stable. En effet, l'aspect « laiteux » fait partie intégrante de la bière blanche de par la présence de froment dans la recette. Cela contribue à la typicité de cette bière et la rend attractive pour le consommateur.

Afin d'améliorer et/ou d'ajuster le trouble ou la turbidité de la bière, du cidre ou d'autres boissons, alcoolisées ou non alcoolisées, il est possible d'ajouter un (ou plusieurs) agent(s) de trouble.

Les agents de trouble ajoutés aux boissons confèrent une apparence plus naturelle à la boisson.

Parmi les agents de trouble habituellement utilisés dans les boissons, on pourra citer des protéines, des gommes solubles dans l'eau et des gommes solubles dans l'huile.

A titre d'exemple de gomme soluble dans l'eau, citons la gomme arabique ou gomme d'acacia, qui agit dans la boisson en empêchant la précipitation des particules suspendues.

On pourra également citer, à titre d'exemples d'agent de trouble, ceux commercialisés :
- sous la dénomination « Cloudix WB ® » par CBS (« Customized Brewing Solutions »), qui est une émulsion d'un extrait de coprah dans l'eau,
- sous la dénomination « Biocloud ® » par Kerry, qui est un dérivé de levure.

Par ailleurs, FR2369798 décrit l'utilisation d'un extrait protéique de petit lait pour stabiliser la turbidité d'une boisson. JP2006275751 décrit un procédé de stabilisation de la turbidité de boissons alcoolisées fermentées, le dit procédé comprenant la sélection de levures contenant le moins de mannoprotéines possibles. D'autre part, il est connu (voir la page internet http:// www.fermentis.com/wp-content/uploads/2016/12/SpringFiner_FR.pdf ainsi que dans le document US2013/309721) d'utiliser un extrait protéique de levures pour la clarification de boissons alcoolisées et non pour stabiliser la turbidité. L'utilisation d'un extrait de levures en vu de stabiliser la turbidité de bières est également connu (voir http://brewing-solutions.com/products/?id=21).

Cependant, les agents de trouble de l'art antérieur ne sont pas forcément adaptés pour la bière, et notamment la bière blanche, où ils ne sont pas toujours stables. En effet, malgré leur présence dans la bière blanche, la turbidité de celle-ci décroit avec le temps.

Il subsiste donc toujours à ce jour le besoin de développer de nouveaux agents de trouble ou de turbidité pour les boissons, et plus particulièrement pour la bière, et de préférence la bière blanche.

Les Inventeurs ont découvert de façon tout à fait inattendue et surprenante qu'un extrait protéique de levure permettait de stabiliser le trouble ou la turbidité des boissons, et notamment de la bière, et de préférence la bière blanche, et ceci de façon satisfaisante dans le temps.

Cette découverte est tout à fait inattendue puisqu'un extrait protéique de levure a notamment été décrit dans l'art antérieur pour une utilisation pour le collage de boissons, en particulier le vin¹⁰.

Le « collage » est une technique qui consiste à introduire dans un produit à traiter (liquides, moûts) une substance capable de floculer et de sédimenter en précipitant dans sa sédimentation les particules en suspension dans ledit produit, et ceci dans le but d'améliorer notamment la limpidité, la filtrabilité, la stabilité dudit produit. Ainsi, de par le collage, les particules visibles et/ou invisibles en suspension dans le produit ainsi que la charge en colloïdes, qui sont responsables du trouble et du défaut de filtrabilité dudit produit, sont fortement réduites, voire totalement éliminées.

La découverte des Inventeurs est donc tout à fait inattendue puisque, selon l'invention, l'extrait protéique de levure a en quelque sorte l'effet inverse de celui préconisé dans l'art antérieur.

En effet, selon l'invention, l'extrait protéique de levure n'est pas utilisé pour éliminer les particules en suspension par précipitation (collage), mais au contraire pour empêcher la précipitation des particules en suspension (stabilisation du trouble).

Ainsi, la présente invention a pour objet l'utilisation d'un extrait protéique de levure pour stabiliser le trouble ou la turbidité d'une boisson, notamment la bière, et de préférence la bière blanche.

Dans la présente demande, le trouble de la boisson, et notamment de la bière, désigne la turbidité de la boisson, et notamment de la bière.

La turbidité désigne la teneur d'un fluide en matières qui le troublent.

La turbidité est mesurée par différentes méthodes de photométrie des milieux troubles comme la néphélométrie, l'opacimétrie et la turbidimétrie. De manière générale, elle est exprimée en UTN (Unité de Turbidité Néphélométrique). Dans le domaine brassicole, les unités de mesure du trouble sont l'EBC (European Brewing Convention), l'ASBC (American Society of Brewing Chemists), le Helm et le FTU (Formazine Nephelometric Unit). La relation entre ces différentes unités est la suivante : 1 EBC = 69,2 ASBC = 40 Helm = 4 FTU (Analytica EBC - méthode 9.30).

Les mesures de turbidité sont effectuées à l'aide d'un appareil tel que le turbidimètre ou le néphélomètre. Il s'agit généralement d'un récepteur photoélectrique mesurant la lumière diffusée par le liquide. Plus particulièrement, c'est la diffusion de la lumière par les suspensions qui permet d'évaluer la concentration de substances en suspension dans un liquide. Cet appareil est généralement constitué d'une source de lumière blanche ou de lumière infrarouge. En néphélométrie, la lumière diffusée est mesurée à 90° d'angle et à 25° d'angle par rapport à la lumière incidente. En turbidimétrie, la lumière diffusée est quant à elle mesurée par un détecteur placé dans l'axe de la lumière incidente.

L'extrait protéique de levure (« EPL ») utilisé selon l'invention désigne les produits issus de la plasmolyse et lyse de levure « intègre », à savoir de levure « entière », vivante ou désactivée.

L'extrait protéique de levure utilisé selon l'invention comprend de 30 à 40 % en poids de protéines présentant un poids moléculaire supérieur à 15kDa, et de préférence supérieur à 30kDa.

L'extrait protéique de levure utilisé selon l'invention comprend en outre de 10 à 14% en poids de ribonucléotides d'un nombre de bases moyen de 280.

A titre d'exemple, un extrait protéique de levure avantageusement utilisé selon l'invention comprend :
- de 30 à 40 % en poids de protéines présentant un poids moléculaire supérieur à 15kDa, et de préférence supérieur à 30kDa,
- de 10 à 14% en poids de ribonucléotides d'un nombre de bases moyen de 280,
   les pourcentages en poids étant définis par rapport au poids total de l'EPL.

L'extrait protéique de levure (EPL) tel qu'utilisé selon l'invention est particulièrement avantageux car il a été obtenu selon un procédé qui a permis l'extraction et la préservation des protéines natives d'une souche de levure spécialement sélectionnée.

Les principales étapes du procédé de préparation de l'EPL sont les suivantes :
- plasmolyse d'une levure intègre (entière), afin d'une part de libérer les macromolécules internes de ladite levure dans leur état natif et d'autre part d'inactiver les enzymes de lyse de ces macromolécules,
- séparation par centrifugation,
- récupération de la fraction soluble contenant l'EPL,
- éventuellement, séchage de la fraction soluble.

L'extrait protéique de levure utilisé selon l'invention pourra se présenter sous la forme d'une poudre ou d'un liquide plus ou moins concentré, et de préférence sous forme d'une poudre.

Selon l'invention, la levure est par exemple choisie dans le groupe comprenant *Saccharomyces, Kluyveromyces, Torula, Candida,* et est de préférence *Saccharomyces,* et avantageusement *Saccharomyces cerevisiae.*

A titre d'exemple d'EPL utilisé selon l'invention, on pourra citer celui commercialisé par la société Fermentis sous la dénomination « Spring'Finer ®».

Il s'agit plus particulièrement d'un extrait protéique provenant d'une souche de levure *Saccharomyces cerevisiae.*

Exclusivement d'origine levurienne, l'EPL « Spring' Finer® » est exempt d'allergènes.

Selon un mode de réalisation avantageux de l'invention, l'extrait protéique de levure se trouve sous forme de poudre et est utilisé à une teneur allant de 5 g (gramme) à 80 g par hectolitre (hl) de boisson, de préférence de 20 à 60 g/hl, et plus préférentiellement de 30 à 50 g/hl.

Lorsque la boisson est de la bière, et notamment de la bière blanche, alors l'utilisation d'un extrait protéique de levure à une teneur de 30 à 50 g/hl est particulièrement appropriée.

Selon un mode de réalisation avantageux de l'invention, l'extrait protéique de levure permet de stabiliser le trouble de la boisson, et notamment de la bière, et de préférence la bière blanche, à une turbidité allant de 40 à 120 EBC, de préférence de 50 à 110 EBC et encore plus préférentiellement de 60 à 100 EBC, pour une période de temps allant de 0 à 80 jours, les valeurs de turbidité étant mesurées à l'aide du néphélomètre d'Haffmans VOS ROTA 90/25 à une température de 4°C et pour 90° d'angle (Analytica EBC - méthode 9.30).

Le néphélomètre d'Haffmans VOS ROTA 90/25 est conçu pour mesurer le trouble de la bière en bouteilles et en cuvettes selon deux angles de mesure :
- les particules inférieures à 1 µm, telles que les protéines, causant principalement la dispersion de la lumière à 90° d'angle,
- les particules supérieures à 1 µm, telles que les levures, causant principalement la dispersion de la lumière à 25° d'angle.

Cet instrument est conforme aux recommandations récentes de MEBAK.

Les valeurs de turbidité sont exprimées en EBC, ASBC, Helm ou FTU. La relation entre ces différentes unités est la suivante : 1 EBC = 69,2 ASBC = 40 Helm = 4 FTU.

L'utilisation de concentrations appropriées de l'extrait protéique de levure permet une stabilité satisfaisante dans le temps du trouble des boissons, et notamment de la bière, et de préférence la bière blanche.

On entend par stabilité dans le temps une stabilité allant jusqu'à 80 jours dans les conditions de conservation à une température de 4°C.

La présente invention va maintenant être illustrée à l'aide des exemples et des figures qui suivent, qui sont donnés à titre d'illustration et ne donc sont nullement limitatifs.

L'EPL utilisé dans les exemples de l'invention est l'EPL « Spring'Finer ® », et est désigné indifféremment par « EPL » ou «EPL Spring'Finer ». Il s'agit d'un produit totalement soluble, qui se présente sous une forme microgranulée favorisant sa dissolution et sécurisant son emploi. Il ne nécessite aucun traitement préalable à son emploi tel que des ajustements de pH ou autres.

L'EPL de l'invention est comparé à l'agent de trouble de l'art antérieur, à savoir « Biocloud ® » commercialisé par Kerry, qui est un dérivé de levure.

Les valeurs de turbidité décrites dans les exemples de l'invention sont mesurées avec le turbidimètre d'Haffmans VOS ROTA 90/25, et sont exprimées en EBC.

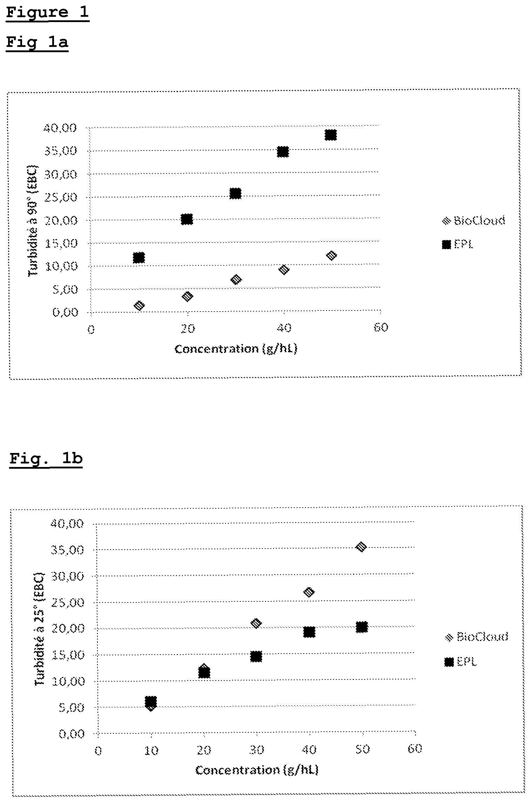

La **Figure 1** illustre l'influence de la concentration (g/hL) de l'agent de trouble (EPL et Biocloud) sur la turbidité (EBC) de la bière stabilisée de type « pils », à 90 ° d'angle (**Fig 1a**) et 25 ° d'angle (**Fig 1b**) au temps t₀. Les turbidités sont mesurées à une température de 4°C.

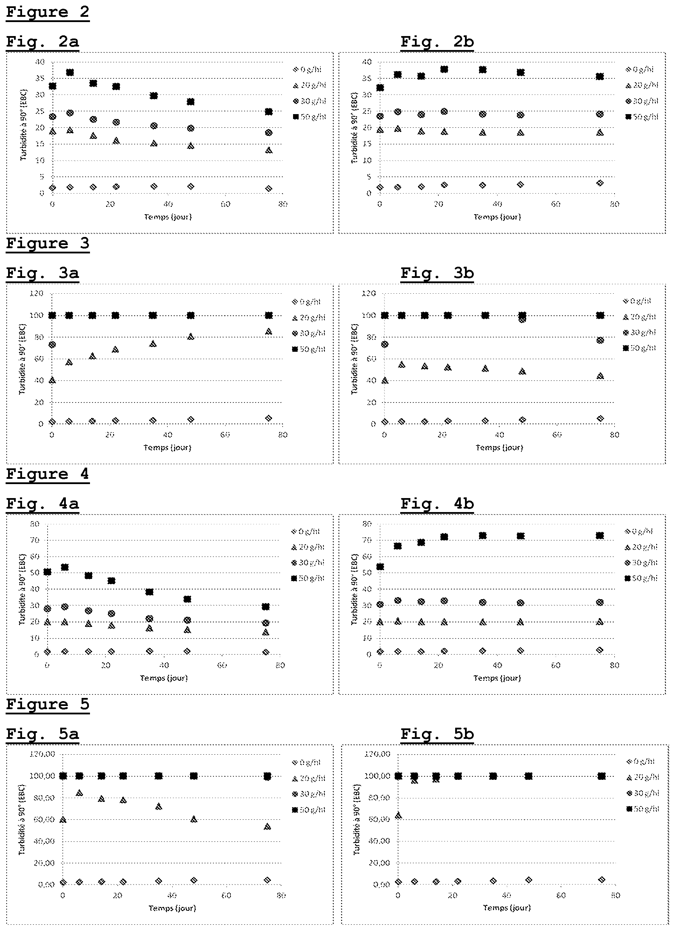

La **Figure 2** illustre les valeurs de turbidité (EBC) obtenues en fonction du temps (exprimé en jours) pour une bière non stabilisée dans laquelle a été rajouté un EPL « natif », c'est-à-dire n'ayant pas subi de pasteurisation. Les échantillons ont été conservés à 20°C et les mesures sont effectuées à une température de 20°C et à 90° d'angle. Différentes concentrations d'EPL ont été testées (0, 20, 30, 50 g/hl).

La **Figure 2a** concerne les résultats obtenus lorsque l'échantillon de bière n'a pas été agité avant mesure et la **Figure 2b** lorsque l'échantillon de bière est agité avant mesure.
La **Figure 3** illustre les valeurs de turbidité (EBC) obtenues en fonction du temps (jours) pour une bière non stabilisée dans laquelle a été rajouté un EPL « natif ». Les échantillons ont été conservés à 4°C et les mesures sont effectuées à une température de 4°C et à 90° d'angle. Différentes concentrations d'EPL ont été testées (0, 20, 30, 50 g/hl).
La **Figure 3a** concerne les résultats obtenus lorsque l'échantillon de bière n'a pas été agité avant mesure et la **Figure 3b** lorsque l'échantillon de bière est agité avant mesure.
La **Figure 4** illustre les valeurs de turbidité (EBC) obtenues en fonction du temps (jours) pour une bière non stabilisée dans laquelle a été rajouté un EPL pasteurisé à 70°C pendant 20 minutes. Les échantillons ont été conservés à 20°C et les mesures sont effectuées à une température de 20°C et à 90° d'angle. Différentes concentrations d'EPL ont été testées (0, 20, 30, 50 g/hl).
La **Figure 4a** concerne les résultats obtenus lorsque l'échantillon de bière n'a pas été agité avant mesure et la **Figure 4b** lorsque l'échantillon de bière est agité avant mesure.
La **Figure 5** illustre les valeurs de turbidité (EBC) obtenues en fonction du temps (jours) pour une bière non stabilisée dans laquelle a été rajouté un EPL pasteurisé à 70°C pendant 20 minutes. Les échantillons ont été conservés à 4°C et les mesures sont effectuées à une température de 4°C et à 90° d'angle. Différentes concentrations d'EPL ont été testées (0, 20, 30, 50 g/hl).
La **Figure 5a** concerne les résultats obtenus lorsque l'échantillon de bière n'a pas été agité avant mesure et la **Figure 5b** lorsque l'échantillon de bière est agité avant mesure.

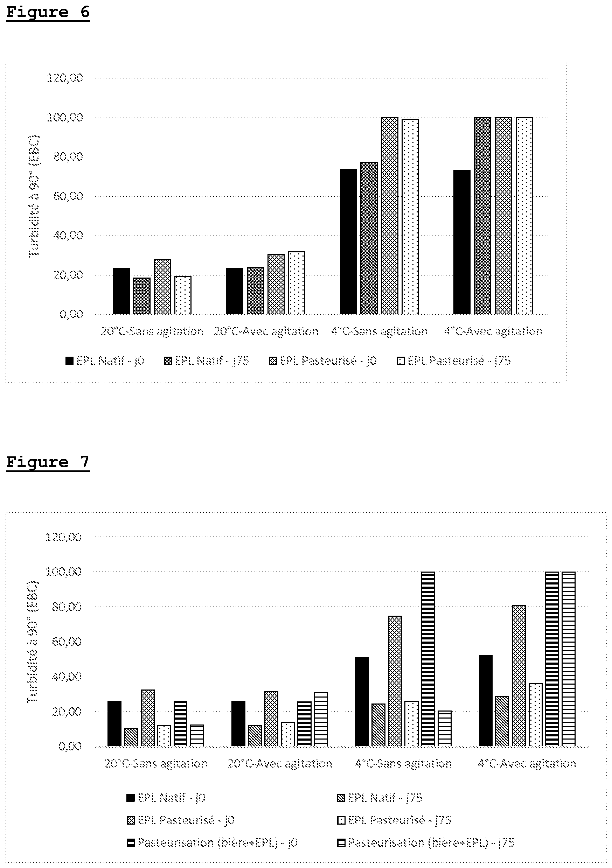

La **Figure 6** est un histogramme résumant l'ensemble des données obtenues aux figures 2 à 5. Plus particulièrement, elle illustre les turbidités obtenues pour un EPL à une concentration de 30g/hL (EPL natif, EPL pasteurisé 20 minutes à 70°C) dans une bière non stabilisée, à 20°C, 4°C, avec ou sans agitation.
La **Figure 7** est un histogramme illustrant les turbidités obtenues pour un EPL à une concentration de 30g/hL (EPL natif, EPL pasteurisé 20 minutes à 70°C avant addition dans les bouteilles et EPL pasteurisé 20 minutes à 70°C dans les bouteilles avec la bière) dans une bière stabilisée de type « pils », à 20°C, 4°C, avec ou sans agitation.

### EXEMPLES

### Exemple 1 : Comparaison de l'EPL de l'invention avec un agent de trouble de l'art antérieur « Biocloud ® »

Cet exemple étudie l'influence de la concentration de l'agent de trouble (EPL ou Biocloud) sur la turbidité de la bière stabilisée de type « pils ».

L'agent de trouble EPL (Spring'Finer) selon l'invention est comparé à l'agent de trouble Biocloud ® de l'art antérieur.

La bière utilisée est de type « pils ». Elle est également appelée pilsener, pilsen ou pilsner. Il s'agit d'un type de bière blonde et limpide, de fermentation basse apparenté au type lager. Elle titre environ 5 degrés d'alcool et possède une amertume moyenne, dépendant du type de houblon utilisé.

Avant leur addition dans des bouteilles, chaque agent de trouble (EPL ou Biocloud) est dissous dans un volume de bière pils équivalent à une bouteille. La masse d'agent de trouble mise en œuvre est telle que ce dernier est concentré 100 fois. Il s'agit ensuite d'ajouter l'agent de trouble en solution dans les bouteilles à raison de 1/100 du volume de celles-ci.

Les concentrations finales testées vont de 0 à 50 grammes (g) d'agent de trouble par hectolitre (hL) de bière pils.

Afin d'illustrer ce qui précède, voici un exemple chiffré pour la concentration finale de 50 g/hL en agent de trouble. 12,5 g d'agent de trouble sont dissous dans 250 mL de bière pils, ce qui donne une concentration de 5000 g/hL. Ensuite, 2,5 mL de cette solution sont ajoutés dans les bouteilles de 250 mL de bière pils. Le facteur de dilution étant de 100 (250/2,5), la concentration finale est bien de 50 g/hL d'agent de trouble par bouteille de 250 mL de bière pils.

Les échantillons sont homogénéisés (agités) avant mesure.

Les mesures de turbidité à 90° d'angle et à 25° d'angle des échantillons de bière sont effectuées à une température de 4°C avec le néphélomètre d'Haffmans VOS ROTA 90/25. Les valeurs de turbidité sont exprimées en EBC.

### Résultats

### Les résultats sont illustrés à la Figure 1 (Fig 1a et Fig 1b).

Les valeurs de turbidité augmentent linéairement avec la concentration de l'agent de trouble.

L'EPL provoque un trouble plus fin dans la bière que le Biocloud. En effet, on note que pour l'EPL, la turbidité à 90° est plus élevée qu'à 25° alors que l'inverse est observé pour le Biocloud.

### Conclusion

Il apparaît que l'EPL offre un trouble plus fin que le Biocloud ce qui lui donne l'avantage d'être plus homogène et donc plus attrayant pour le consommateur. De plus, il a moins tendance à sédimenter dans le fond de la bouteille, ce qui influence ainsi favorablement la stabilité du trouble au cours du temps.

### Exemple 2 : Influence du type de bière et de la température sur les valeurs de turbidité obtenues avec l'EPL

Produits testés :
Agent de trouble de l'invention EPL (Spring'Finer)
Bière A : bière filtrée, stabilisée (tous les complexes « protéines-polyphénols » responsables du trouble sont retirés) et pasteurisée.
Bière B : bière centrifugée et pasteurisée (non stabilisée).
Bière C : bière centrifugée (non pasteurisée et non stabilisée).

Avant addition dans les bouteilles, l'agent de trouble EPL est dissous dans un volume de bière A, B ou C équivalent à une bouteille et est pasteurisé pendant 20 minutes à une température de 70°C. La masse d'agent de trouble mise en œuvre est telle que ce dernier est concentré 100 fois. Il s'agit ensuite d'ajouter l'agent de trouble en solution dans les bouteilles à raison de 1/100 du volume de celles-ci.

La concentration finale dans chaque bouteille est de 30 grammes (g) d'EPL dissous préalablement par hectolitre (hL) de bière.

Les échantillons sont homogénéisés (agités) avant mesure.

Les mesures de turbidité des échantillons de bière sont effectuées à 90° d'angle, à une température de 20°C et 4°C avec le néphélomètre d'Haffmans VOS ROTA 90/25. Les valeurs de turbidité sont exprimées en EBC.

### Résultats

Les résultats sont illustrés dans le tableau 1 ci-dessous.

**Tableau 1 : Valeurs de turbidité (EBC) à l'angle 90° pour des échantillons de bières (A, B, C) comprenant 30 g/hL d'EPL (précédemment pasteurisé en solution), et pour deux bières blanches commerciales belges (Blanche 1, Blanche 2), à 20°C et 4°C.**

| Bière | Turbidité à 90° | Turbidity à 90° |
|---|---|---|
| | (EBC) | (EBC) |
| | **20°C** | **4°C** |
| A (essai 1) | 13 | 30 |
| A (essai 2) | 26 | 51 |
| B | 20 | 96 |
| C | 28 | 100 |
| Blanche 1 | 23 | 100 |
| Blanche 2 | 35 | 100 |

Les valeurs de turbidité sont supérieures pour une température de 4°C que pour une température de 20°C : l'EPL est impliqué dans la formation du trouble au froid dû à l'association des polypeptides et des polyphénols.

Comme attendu, la formation du trouble au froid en présence de l'EPL est améliorée dans les bières non stabilisées (B et C). En effet, dans la bière stabilisée (A) tous les complexes « protéines-polyphénols » responsables du trouble ont été retirés.

### Conclusion

L'EPL ajouté dans les bières non stabilisées (B et C) permet d'atteindre un trouble au froid similaire à celui de bières blanches commerciales belges (Blanche 1 et Blanche 2) .

### Exemple 3 : Stabilité du trouble associée avec l'utilisation de l'EPL dans des bières non stabilisées

Produits testés :
Agent de trouble EPL (Spring'Finer) de l'invention
Bière C : bière centrifugée (non pasteurisée et non stabilisée).

Avant addition dans les bouteilles, l'agent de trouble EPL est dissous dans un volume de bière C équivalent à une bouteille. La masse d'agent de trouble mise en œuvre est telle que ce dernier est concentré 100 fois. Il s'agit ensuite d'ajouter l'agent de trouble en solution dans les bouteilles à raison de 1/100 du volume de celles-ci.

Traitements :
Pas de pasteurisation : EPL natif

Solution d'EPL 100 fois concentrée (obtenue par dissolution préalable dans la bière C) pasteurisée pendant 20 minutes à 70°C avant addition dans les bouteilles.

Les concentrations testées finalement dans les bouteilles sont de 0, 20, 30 et 50 g d'EPL dissous préalablement/hL de bière.

Les mesures de turbidité des échantillons de bière sont effectuées à 90°, à une température de 20°C et 4°C avec le néphélomètre d'Haffmans VOS ROTA 90/25. Les valeurs de turbidité sont exprimées en EBC.

Les turbidités des bières contenant l'EPL sont mesurées sur une période de temps de 75 jours. Les bières sont stockées à 20°C et 4°C et leur turbidité est mesurée avant homogénéisation (agitation) et après homogénéisation des échantillons (afin de reproduire les conditions de service de la bière : « versez d'abord un demi-verre et agitez doucement la bouteille avant de remplir le verre »).

### Résultats

Les résultats sont illustrés dans les figures 2 à 6.

### 1) EPL natif en solution (pas de pasteurisation de l'agent de trouble EPL)

Les valeurs de turbidité obtenues en fonction du temps pour la bière C dans laquelle a été rajouté l'EPL natif à différentes concentrations sont illustrées :
- Figure 2a (pas d'agitation avant mesure) et Figure 2b (agitation avant mesure), pour une température de 20°C,
- Figure 3a (pas d'agitation avant mesure) et Figure 3b (agitation avant mesure), pour une température de 4°C.

### 2) EPL en solution pasteurisé pendant 20 minutes à une température de 70°C avant addition dans les bouteilles

Les valeurs de turbidité obtenues en fonction du temps pour la bière C dans laquelle a été rajouté l'EPL en solution pasteurisé à différentes concentrations sont illustrées :
- Figure 4a (pas d'agitation avant mesure) et Figure 4b (agitation avant mesure), pour une température de 20°C,
- Figure 5a (pas d'agitation avant mesure) et Figure 5b (agitation avant mesure), pour une température de 4°C.

### 3) Résumé des points 1 et 2 pour la concentration de 30 g/hL.

Les valeurs de turbidité pour la bière C dans laquelle a été ajouté l'EPL natif et l'EPL en solution pasteurisé à raison de 30 g/hL, mesurées à 20 et 4°C, avec ou sans agitation sont illustrées à la figure 6.

### Observations et conclusion des figures 2 à 6

L'objectif principal de l'utilisation d'un agent de trouble est que le trouble reste stable au cours du temps et donc ne sédimente pas au fond des bouteilles.

Même si le trouble des bières dû à l'utilisation de l'EPL (natif ou pasteurisé) décroit légèrement dans un premier temps, il se stabilise finalement.

A nouveau, les valeurs de turbidité sont supérieures pour une température de 4°C que pour une température de 20°C : l'EPL est impliqué dans la formation du trouble au froid dû à l'association des polypeptides et des polyphénols.

L'utilisation de l'EPL natif est donc un bon choix puisque d'une part il est simple à utiliser et que d'autre part il permet une bonne stabilité du trouble de la bière dans le temps.

### Exemple 4 : Stabilité du trouble associée à l'utilisation de l'EPL dans une bière pils

Produits testés :
Agent de trouble de l'invention EPL (Spring'Finer)
Bière A : bière filtrée, stabilisée (tous les complexes « protéines-polyphénols » responsables du trouble sont retirés) et pasteurisée.

Avant addition dans les bouteilles, l'agent de trouble EPL est dissous dans un volume de bière A équivalent à une bouteille. La masse d'agent de trouble mise en œuvre est telle que ce dernier est concentré 100 fois. Il s'agit ensuite d'ajouter l'agent de trouble en solution dans les bouteilles à raison de 1/100 du volume de celles-ci.

Traitements :
Pas de pasteurisation : EPL natif
Solution d'EPL 100 fois concentrée (obtenue par dissolution préalable dans la bière A) pasteurisée pendant 20 minutes à 70°C avant addition dans les bouteilles.

Pasteurisation des bouteilles pendant 20 minutes à 70°C après addition de la solution d'EPL 100 fois concentrée non pasteurisée.

Les concentrations testées finalement dans les bouteilles sont de 0, 20, 30 et 50 g d'EPL dissous préalablement/hL de bière.

Les mesures de turbidité des échantillons de bière sont effectuées à 90°, à une température de 20°C et 4°C avec le néphélomètre d'Haffmans VOS ROTA 90/25. Les valeurs de turbidité sont exprimées en EBC.

Les turbidités des bières contenant l'EPL sont mesurées sur une période de temps de 75 jours. Les bières sont stockées à 20°C et 4°C et leur turbidité est mesurée avant homogénéisation (agitation) et après homogénéisation des échantillons.

### Résultats

Les valeurs de turbidité mesurées à l'angle 90° pour la bière A dans laquelle a été ajouté l'EPL natif (30 g/hL), l'EPL dissous et préalablement pasteurisé (30 g/hL) et l'EPL dissous pasteurisé dans les bouteilles avec la bière (30 g/hL), à 20 et 4°C, avec ou sans agitation sont illustrées à la figure 7.

### Observations et conclusions

Il ressort de la figure 7 que le trouble dans la bière comprenant l'EPL natif ou l'EPL pasteurisé décroit significativement durant le stockage de la bière.

La stabilité du trouble au cours du temps en présence de l'EPL (natif ou pasteurisé) à 4°C est négativement impactée dans les bières stabilisées alors que ça n'est pas le cas pour les bières non stabilisées (se référer à la figure 6).

En effet, dans les bières stabilisées de type pils (bière A), tous les complexes « protéines-polyphénols » responsables du trouble sont retirés.

De plus, la pasteurisation de la bière comprenant l'EPL dissous préalablement semble impacter l'agent de trouble au niveau de sa structure et affecte donc la stabilité du trouble. En effet, lorsque l'échantillon n'est pas homogénéisé avant la mesure, on observe une chute importante du trouble alors que ce dernier est remis complètement en suspension lorsque la bouteille est agitée, ce qui laisse supposer une dégradation de l'EPL.

### Bibliographie

1. Steiner E., Becker T. and Gastl M., Turbidity and Haze Formation in Beer - Insights and Overview, 2012, J. Inst. Brew., 116, 360-368.
2. Delvaux, F., Delvaux, F.R., Delcour, J.A., Characterisation of the colloidal haze in commercial and pilot scale Belgian white beers, 2000, J. Inst. Brew., 106, 221-227.
3. Bamforth, C. W., Beer haze. 1999, J. Am. Soc. Brew. Chem., 57(3), 81-90.
4. Loisa, M., Nummi, M. and Daussant, J., Quantitative determination of some beer protein components by an immunological method, 1971, Brauwissenschaft, 24(10), 366-368.
5. Asano, K., Shinagawa, K. and Hashimoto, N., Characterization of haze-forming proteins of beer and their roles in chill haze formation, 1982, J. Am. Soc. Brew. Chem., 40(4), 147-154.
6. Limure, T., Nankaku, N. Watanabe-Sugimoto, M., Hirota, N., T. Z.,, Kihara, M., Hayashi, K., Ito, K. and Sato, K., Identification of novel haze-active beer proteins by proteome analysis, 2009, J. Cereal Sci., 49(1), 141-147.
7. Leiper, K. A., Stewart, G. G. and McKeown, I. P., Beer polypeptides and silica gel. Part I. Polypeptides involved in haze formation, 2003, J. Inst. Brew., 109(1), 57-72.
8. Nadzeyka, A., Altenhofen, U. and Zahn, H., The significance of beer proteins in relationship to cold break and age-related haze Formation, 1979, Brauwissenschaft, 32(6), 167-172.
9. Siebert, K. J., Carrasco, A. and Lynn, P.Y., Formation of protein-polyphenol haze in beverages, 1996, J. Agr. Food Chem., 44(8), 1997-2005.
10. Revue des œnologues, N° 120 ; pages 47-50, 2006.

## Revendications

1. Utilisation d'un extrait protéique de levure pour stabiliser le trouble ou la turbidité d'une boisson, notamment la bière, et de préférence la bière blanche.

2. Utilisation selon la revendication 1, dans laquelle l'extrait protéique de levure comprend de 30 à 40 % en poids de protéines présentant un poids moléculaire supérieur à 15kDa, et de préférence supérieur à 30kDa.

3. Utilisation selon la revendication 1 ou la revendication 2, dans laquelle l'extrait protéique de levure comprend de 10 à 14% en poids de ribonucléotides d'un nombre de bases moyen de 280.

4. Utilisation selon l'une quelconque des revendications 1 à 3, dans laquelle l'extrait protéique de levure se présente sous la forme d'une poudre ou d'un liquide plus ou moins concentré, et de préférence sous forme d'une poudre.

5. Utilisation selon l'une quelconque des revendications 1 à 4, dans laquelle la levure est choisie dans le groupe comprenant *Saccharomyces, Kluyveromyces, Torula, Candida,* et est de préférence *Saccharomyces,* et avantageusement *Saccharomyces cerevisiae.*

6. Utilisation selon l'une quelconque des revendications 1 à 5, dans laquelle l'extrait protéique de levure se trouve sous forme de poudre et est utilisé à une teneur allant de 5 g (gramme) à 80 g par hectolitre (hl) de boisson, de préférence de 20 à 60 g/hl, et plus préférentiellement de 30 à 50 g/hl.

7. Utilisation selon la revendication 6, dans laquelle la boisson est de la bière, de préférence la bière blanche.

8. Utilisation selon l'une quelconque des revendications 1 à 7, dans laquelle l'extrait protéique de levure permet de stabiliser le trouble de la boisson, et notamment de la bière, et de préférence la bière blanche, à une turbidité allant de 40 à 120 EBC, de préférence de 50 à 110 EBC et encore plus préférentiellement de 60 à 100 EBC, pour une période de temps allant de 0 à 80 jours, les valeurs de turbidité étant mesurées à l'aide du néphélomètre d'Haffmans VOS ROTA 90/25 à une température de 4°C et pour 90° d'angle (Analytica EBC - méthode 9.30).

## Patentansprüche

1. Verwendung eines Hefeproteinextrakts zur Stabilisierung der Trübung oder der Turbidität eines Getränks, insbesondere von Bier und vorzugsweise von Weißbier.

2. Verwendung nach Anspruch 1, wobei der Hefeproteinextrakt 30 bis 40 Gewichts-% Proteine mit einem Molekulargewicht von mehr als 15 kDa und vorzugsweise mehr als 30 kDa umfasst.

3. Verwendung nach Anspruch 1 oder Anspruch 2, wobei der Hefeproteinextrakt 10 bis 14 Gewichts-% Ribonukleotide mit einer durchschnittlichen Anzahl von Basen von 280 umfasst.

4. Verwendung nach einem der Ansprüche 1 bis 3, wobei der Hefeproteinextrakt in der Form eines Pulvers oder einer mehr oder weniger konzentrierten Flüssigkeit und vorzugsweise in Form eines Pulvers vorliegt.

5. Verwendung nach einem der Ansprüche 1 bis 4, wobei die Hefe aus der Gruppe ausgewählt ist, umfassend *Saccharomyces*, *Kluyveromyces*, *Torula*, *Candida* und vorzugsweise *Saccharomyces* und vorteilhafterweise *Saccharomyces cerevisiae* ist.

6. Verwendung nach einem der Ansprüche 1 bis 5, wobei der Hefeproteinextrakt in Pulverform vorliegt und in einem Gehalt im Bereich von 5 g (Gramm) bis 80 g pro Hektoliter (hl) Getränk verwendet wird, vorzugsweise von 20 bis 60 g/hl und stärker bevorzugt von 30 bis 50 g/hl.

7. Verwendung nach Anspruch 6, wobei das Getränk Bier ist, vorzugsweise Weißbier.

8. Verwendung nach einem der Ansprüche 1 bis 7, wobei der Hefeproteinextrakt es ermöglicht, die Trübung des Getränks und insbesondere des Bier und vorzugsweise des Weißbiers bei einer Turbidität im Bereich von 40 bis 120 EBC, vorzugsweise von 50 bis 110 EBC und noch bevorzugter von 60 bis 100 EBC, für einen Zeitraum von 0 bis 80 Tagen zu stabilisieren, wobei die Turbiditätswerte mit Hilfe des Haffmans VOS ROTA 90/25 Nephelometers bei einer Temperatur von 4 °C und für einen Winkel von 90° (Analytica EBC - Methode 9.30) gemessen sind.

## Claims

1. The use of a yeast protein extract for stabilizing the haze or turbidity of a drink, especially beer, and preferably white beer.

2. The use as claimed in claim 1, wherein the yeast protein extract comprises from 30 to 40% by weight of proteins having a molecular weight of greater than 15 kDa and preferably greater than 30 kDa.

3. The use as claimed in claim 1 or claim 2, wherein the yeast protein extract comprises from 10 to 14% by weight of ribonucleotides having a mean number of bases of 280.

4. The use as claimed in any one of claims 1 to 3, wherein the yeast protein extract is in the form of a more or less concentrated powder or liquid, and preferably in the form of a powder.

5. The use as claimed in any one of claims 1 to 4, wherein the yeast is selected from the group consisting of *Saccharomyces, Kluyveromyces, Torula, Candida,* and is preferably *Saccharomyces,* and advantageously *Saccharomyces cerevisiae.*

6. The use as claimed in any one of claims 1 to 5, wherein the yeast protein extract is in the form of powder and is used at a content ranging from 5 g (grams) to 80 g per hectoliter (hl) of drink, preferably from 20 to 60 g/hl, and more preferentially from 30 to 50 g/hl.

7. The use as claimed in claim 6, wherein the drink is beer, preferably white beer.

8. The use as claimed in any one of claims 1 to 7, wherein the yeast protein extract makes it possible to stabilize the haze of the drink, and especially beer, and preferably white beer, at a turbidity ranging from 40 to 120 EBC, preferably from 50 to 110 EBC and even more preferentially from 60 to 100 EBC, for a period of time ranging from 0 to 80 days, the turbidity values being measured using a Haffmans VOS ROTA 90/25 nephelometer at a temperature of 4°C and for a 90° angle (Analytica EBC - method 9.30).
